# FASCICULE DE BREVET EUROPEEN

(11) **EP 3 628 514 B1**
(45) Date de publication et mention de la délivrance du brevet: **27.10.2021**
(21) Numéro de dépôt: 19199762.6
(22) Date de dépôt: 26.09.2019
(51) Int. Cl.: B60G 21/05

(54) **CHAPE DÉFORMABLE PLASTIQUEMENT POUR LE MONTAGE D'UNE ROUE DE VÉHICULE AUTOMOBILE**
PLASTISCH DEFORMIERBARE KONSOLE ZUR BEFESTIGUNG EINES KRAFTFAHRZEUGRADES
PLASTICALLY DEFORMABLE SUPPORT FOR MOUNTING A MOTOR VEHICLE WHEEL

(30) Priorité: 28.09.2018 FR 1858929
(43) Date de publication de la demande: 01.04.2020
(73) Titulaire: RENAULT s.a.s., 92100 Boulogne-Billancourt (FR)
(72) Inventeur: GUILLEUX, JEROME, 72700 SAINT GEORGES DU BOIS (FR); RIFFIER, BRUNO, 72210 FILLE SUR SARTHE (FR)

(56) Documents cités:
- EP-A1- 1 886 849
- WO-A1-2012/047137
- WO-A1-2016/193563
- FR-A1- 3 041 899

## Description

### DOMAINE TECHNIQUE DE L'INVENTION

La présente invention concerne une chape pour le montage d'une roue de véhicule sur un élément de structure ou de suspension d'un véhicule automobile.

### ETAT DE LA TECHNIQUE

L'invention concerne notamment une chape pour le montage d'un organe sur lequel la roue est montée tournante.

Selon une conception connue, la roue est par exemple portée par une fusée de roue.

La partie inférieure de la roue, aussi appelée pied de roue, peut être soumise à un choc ou à un impact dit latéral, c'est à dire selon une direction globalement transversale par rapport à la direction générale longitudinale du véhicule correspondant à la direction de roulage du véhicule.

Un tel choc ou impact peut par exemple se produire en cas de survirage du véhicule sur un sol de faible adhérence aboutissant à un choc avec une bordure d'un trottoir.

Dans le cas d'un tel choc, il est nécessaire, dans la conception globale du véhicule, de prévoir un scénario dit de "fusibilité" visant à informer le conducteur que le train de roues correspondant est endommagé, et ceci avant que le train ne présente ultérieurement des risques de rupture.

Selon une solution connue, c'est par exemple la fusée qui porte la roue qui se déforme de manière plastique en induisant un carrossage positif de la roue qui est perçu par le conducteur. selon une autre conception, c'est l'élément de structure (profil ou traverse) qui est déstabilisé.

De nouvelles conceptions visent à remplacer la fusée par un roulement qui est vissé sur une chape spécifique en combinaison avec une traverse extrêmement rigide. Aucun de ces deux composants n'est alors susceptible de déformer en cas de choc latéral sur le pied de roue.

Les chapes connues, pour le montage d'une roue sur un longeron, sont généralement de conception rigide. Elles présentent une section en U et qui comporte une plaque support de la roue d'orientation globalement verticale et deux ailes latérales triangulaires parallèles orthogonales au plan de la plaque support dont chacune est délimitée par un premier côté vertical adjacent à la plaque support, un deuxième côté inférieur sensiblement horizontal, et un troisième côté incliné. Chacune des ailes latérales est ici rigidifiée par une portion emboutie.

Le document WO-A1-2016/193563 illustre des chapes comprenant une zone de résistance réduite qui se déforme plastiquement lorsqu'un choc latéral est appliqué à la partie inférieure de la roue. Il peut s'agir, par exemple, d'une portion déformable de l'aile latérale sous la forme d'un bossage ou d'une réduction de l'épaisseur d'une portion des ailes latérales ou encore une découpe formée dans le troisième côté.

Mais ces solutions sont difficiles à mettre en œuvre et demandent une ou des étapes supplémentaires complexes à mettre en œuvre et coûteuse et/ou ne sont pas suffisantes pour réduire la résistance des ailes latérales en cas de choc latéral.

Il existe donc un besoin d'une nouvelle conception de la chape qui soit de conception simple, peu coûteuse et réduise suffisamment la rigidité de la chape en cas de choc frontal.

### BREF RESUME DE L'INVENTION

Dans ce but, l'invention propose une chape, pour le montage d'une roue de véhicule automobile sur un élément de structure ou de suspension d'un véhicule automobile, qui présente une section en U et qui comporte :
- une plaque support de la roue d'orientation globalement verticale ;
- et deux ailes latérales triangulaires parallèles et orthogonales au plan de la plaque support, dont chacune est délimitée par un premier côté vertical adjacent à la plaque support, un deuxième côté inférieur sensiblement horizontal, et un troisième côté.

Chaque aile latérale comporte au moins une zone de résistance réduite qui se déforme plastiquement lorsqu'un choc latéral est appliqué à la partie inférieure de la roue, selon une direction T transversale par rapport au plan de la roue.

Selon l'invention, chaque aile comporte au moins un évidement traversant qui constitue une zone de résistance réduite de l'aile latérale et que la zone de résistance réduite comporte en outre une découpe incurvée formée dans le troisième côté.

Selon différents modes de réalisation de l'invention, qui pourront être mis en œuvre ensemble ou séparément :
- le au moins un évidement traversant est situé entre le premier côté vertical et le troisième côté de l'aile latérale,
- le au moins un évidement est un trou traversant,
- le contour du trou traversant est de forme circulaire ou oblongue,
- la plaque support comporte un trou central,
- le au moins un évidement est situé au-dessus d'un plan horizontal passant par le centre du trou central,
- le au moins un évidement est agencé au voisinage du creux de la découpe incurvée,
- le au moins un évidement est de forme oblongue et son contour comporte un tronçon courbé analogue à celui du profil incurvé de la découpe,
- chaque aile latérale comporte une bande inférieure de rigidification qui s'étend dans le plan de l'aile latérale, le long dudit deuxième côté, à partir de la plaque support,
- la chape présente une symétrie de conception par rapport à un plan vertical médian parallèle aux ailes latérales.

### BREVE DESCRIPTION DES FIGURES

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective transparente illustrant un premier mode de réalisation d'une chape selon l'invention ;
- la figure 2 est une vue analogue à celle de la figure 1 qui illustre un deuxième mode de réalisation d'une chape selon l'invention ;
- la figure 3 est une vue analogue à celle de la figure 1 qui illustre un troisième mode de réalisation d'une chape selon l'invention ; et
- la figure 4 est une vue latérale de la chape de la figure 1, en association avec un organe de montage à rotation d'une roue de véhicule, après déformation.

### DESCRIPTION DETAILLEE DES FIGURES

Dans la description qui va suivre, des chiffres de référence identiques désignent des pièces identiques ou ayant des fonctions similaires.

Pour faciliter la compréhension de la description et des revendications, en référence à la gravité terrestre et au trièdre L, V, T indiqué sur les figures, on utilisera les termes, vertical, longitudinal, transversal et horizontal.

Chacune des chapes représentée aux figures présente ici, à titre non limitatif, une symétrie générale de conception par rapport à un plan vertical et transversal de symétrie PVM.

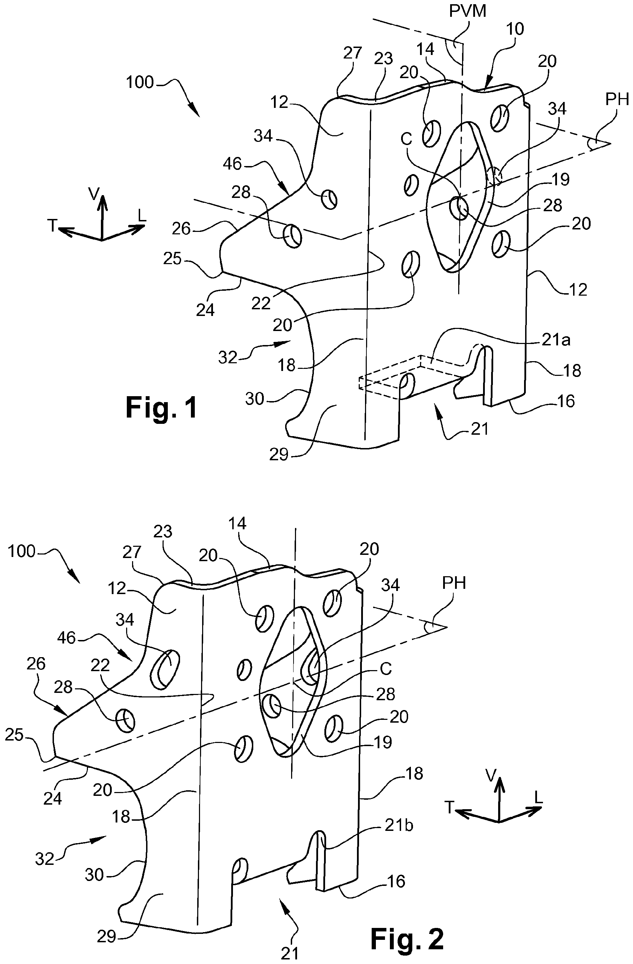

On a représenté à la figure 1 une chape 100 constituée d'une plaque support 10, et de deux ailes latérales 12.

A titre non limitatif, la chape 100 est réalisée en une seule pièce en tôle métallique découpée et pliée.

La plaque support 10 s'étend dans un plan globalement vertical et longitudinal.

La plaque support 10 constitue la face avant de la chape 100.

La plaque support 10 est délimitée par deux bords horizontaux longitudinaux supérieur 14 et inférieur 16, et par deux bords verticaux 18.

De manière connue, dans sa partie supérieure, la plaque support 10 comporte ici (à titre non limitatif) un trou central 19, par exemple pour le passage d'une partie d'un organe de guidage en rotation de la roue - non représentés, et quatre trous périphériques 20 par exemple pour le passage d'organes de fixation de l'organe de guidage en rotation de la roue.

On définit sur les figures le centre "C" du trou central 19 et un plan géométrique horizontal PH passant par le centre C.

Le bord horizontal longitudinal inférieur 16 présente une découpe 21 rectangulaire qui est centrée longitudinalement, qui est de contour rectangulaire avec deux bords verticaux libres et un bord supérieur horizontal à partir duquel la partie découpée 21a est repliée transversalement vers l'avant de la chape 100 en s'étendant horizontalement.

Chaque aile latérale 12 s'étend dans un plan d'orientation verticale et transversale. Ainsi, les deux ailes latérales 12 sont parallèles entre elles et sont orthogonales au plan de la plaque support 10.

Chaque aile latérale 12 est de forme générale triangulaire rectangle et elle est délimitée par un côté vertical 22 correspondant au bord vertical adjacent 18 de la plaque support 10.

Chaque aile latérale 12 est aussi délimitée par un côté horizontal transversal inférieur 24 et par un côté arrière incliné 26. Le côté incliné 26 s'étend depuis l'extrémité libre arrière 25 du côté horizontal inférieur 24, jusqu'à l'extrémité supérieure 23 du côté vertical 22 à laquelle elle est reliée par un tronçon courbé convexe 27.

De manière connue, dans leur partie inférieure, notamment au voisinage du plan PH, chaque aile latérale comprend un trou 28, par exemple pour le passage d'organes de fixation de câbles, telles que des agrafes.

A sa partie inférieure, chaque aile latérale 12 se prolonge par une bande inférieure de rigidification 29 qui s'étend dans le plan de l'aile latérale 12, le long du deuxième côté inférieur horizontal 24.

La bande de rigidification 29 s'étend transversalement vers l'arrière, à partir du bord vertical 18 de la plaque support 10, sur une partie seulement de la longueur du deuxième côté inférieur horizontal 24.

Ainsi, la bande de rigidification 29 est délimitée vers l'arrière par un bord vertical 30 qui, avec la portion libre du deuxième côté inférieur horizontal 24, délimite une "découpe" 32 de contour concave arrondi.

Les deux découpes 32 permettent de fixer la chape 100, par exemple par soudage, sur un élément structurel non représenté. L'élément structurel est alors reçu dans les deux découpes 32.

Selon l'invention, chaque aile latérale 12 comporte au moins une zone de résistance réduite déformable plastiquement qui est réalisée sous la forme d'au moins un évidement traversant 34 situé transversalement entre le premier côté vertical 22 et le troisième côté incliné 26 de l'aile latérale 12.

Dans les modes de réalisation représentés aux figures 1 à 3, chaque aile latérale 12 comprend un évidement 34 sous la forme d'un trou 34 traversant situé verticalement au-dessus du plan horizontal PH passant par le centre C du trou central 19.

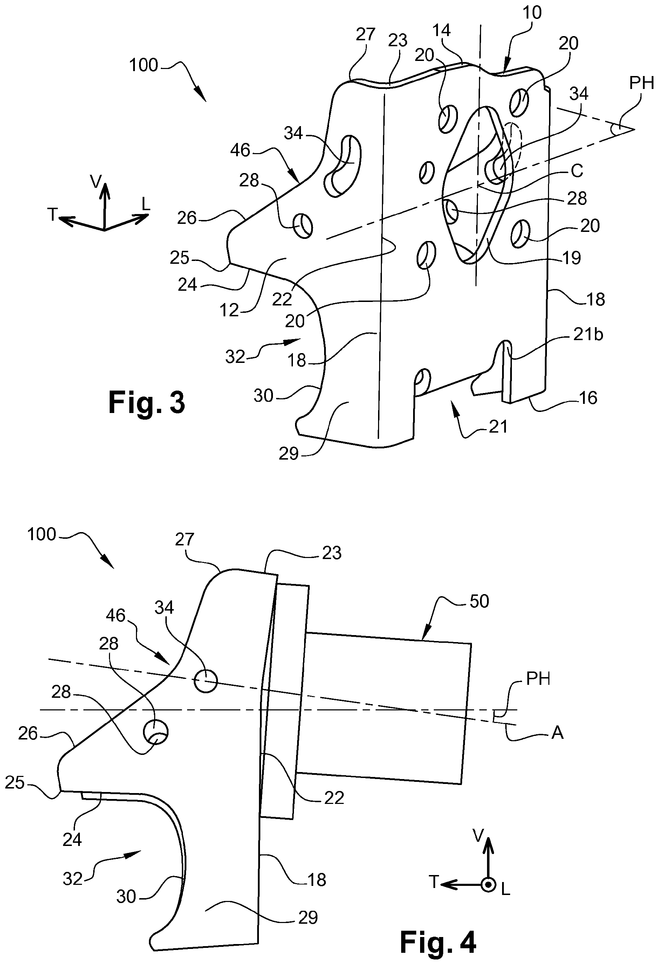

Dans le mode de réalisation illustré à la figure 1, les évidements 34 sont des trous de contour circulaire, tandis que les évidements 34 des modes de réalisation illustrés aux figures 2 et 3 sont de forme oblongue.

Les deux évidements 24 sont par exemple alignés selon l'axe longitudinal L.

Plus précisément, les évidements 34 du second mode de réalisation illustré à la figure 2 sont ovales ou elliptiques à contour continu concave et, tandis que les évidements 34 du troisième mode de réalisation illustré à la figure 3 présentent un contour comportant un tronçon courbé convexe en présentant ainsi une forme dite de « haricot ».

Dans un mode de réalisation non représenté, chacune des ailes latérales 12 peut comporter une pluralité d'évidements traversant 34 de contours tous identiques ou combinés de différents contours.

Dans un autre mode de réalisation non représenté, l'évidement 34 est au moins en partie ouvert dans le troisième côté incliné 26.

La dimension de chacun des évidements 34 est déterminée de manière à affaiblir la zone de résistance réduite tout en maintenant une tenue en endurance satisfaisante de l'essieu.

Par exemple, la distance entre le troisième côté incliné 26 et la périphérie avant de l'évidement 34 doit être suffisamment grande pour maintenir la tenue en endurance de l'essieu et suffisamment petite pour faciliter la déformation plastique en cas de choc.

La distance est de l'ordre, par exemple, d'au moins 8 mm.

Dans cette conception, en cas de choc ou d'impact, par exemple sur le pied de la roue associée, les deux ailes latérales 12 sont susceptibles de se déformer simultanément pour permettre une déformation globale de la chape 100 correspondant à une modification du carrossage dans le sens du carrossage positif.

Cette déformation correspond à une déformation de la plaque support avant 10, dont la partie supérieure peut par exemple "pivoter" autour d'un axe horizontal et longitudinal (non représenté).

Chaque zone de résistance réduite déformable plastiquement (comportant un ou plusieurs évidements 34) peut ou non être associée à une découpe 46 de profil concave formée dans le troisième côté incliné 26.

Dans les modes de réalisation illustrés aux figures, chaque aile latérale 12 comporte une découpe 46 de profil incurvé concave qui est formée dans le troisième côté incliné 26.

Ainsi, l'évidement 34 est agencé au voisinage du creux de la découpe incurvée 46 de manière à ce que, selon la direction transversale T, dans la zone de la découpe 46, l'aile latérale présente une largeur encore plus réduite par rapport à une conception sans découpe facilitant la déformation plastique en cas de choc, pour aboutir à l'état schématisé à la figure 4.

Dans le troisième mode de réalisation de la figure 3, et par rapport aux autres modes de réalisation le tronçon courbé convexe de chacun des évidements 34 est sensiblement homologue de celui du profil incurvé de la découpe 46 de manière à réduire la largeur de l'aile latérale 12 dans cette zone et faciliter encore la déformation plastique en cas de choc.

Comme on peut le voir à la figure 4 sur laquelle on a schématisé un organe 50 - tel que par exemple un roulement - pour le montage à rotation de la roue associée, en cas de choc ou d'impact par exemple sur le pied de la roue associée, les deux ailes latérales 12 sont susceptibles de se déformer simultanément pour permettre une déformation globale de la chape 100 correspondant à une modification du carrossage dans le sens du carrossage positif (illustré schématiquement par l'inclinaison de l'axe a de l'organe 50 par rapport au plan horizontal PH).

Les chapes selon l'invention sont simples de conception et faciles à réaliser.

Les évidements 34 peuvent être réalisés par découpe en même temps, par exemple, que les trous périphériques 20, les trous 28 et la découpe incurvée 46.

Les évidements, les différents trous et les différentes découpes de la chape 100 peuvent être obtenus par exemple par emboutissage d'une plaque avant le pliage à angle droit des ailes latérales 12 pour former la chape 100.

La chape peut ainsi être facilement obtenue en deux étapes à partir d'une plaque de tôle : une première étape de découpe de la chape 100 et des différents trous et évidements ; puis une seconde étape de pliage des ailes 12 et de la partie découpée 21a.

De plus la suppression de matière au niveau des évidements pour former des zones de résistance réduite permet d'alléger la chape, et donc de diminuer le poids du véhicule, ce qui est très souvent recherché dans l'industrie automobile, notamment dans le but de réduire la consommation en carburant des véhicules.

## Revendications

1. Chape (100), pour le montage d'une roue de véhicule automobile sur un élément de structure ou de suspension d'un véhicule automobile, qui présente une section en U et qui comporte
- une plaque support (10) de la roue d'orientation globalement verticale ;
- et deux ailes latérales (12) triangulaires parallèles et orthogonales au plan de la plaque support (10), dont chacune est délimitée par un premier côté vertical (22) adjacent à la plaque support (10), un deuxième côté inférieur (24) sensiblement horizontal, et un troisième côté (26),
chaque aile latérale (12) comportant au moins une zone (34) de résistance réduite qui se déforme plastiquement lorsqu'un choc latéral est appliqué à la partie inférieure de la roue, selon une direction (T) transversale par rapport au plan de la roue, **caractérisée en ce que** chaque aile comporte au moins un évidement traversant (34) qui constitue une zone de résistance réduite de l'aile latérale (12) et **en ce que** la zone de résistance réduite comporte en outre une découpe incurvée (46) formée dans le troisième côté (26).

2. Chape (100) selon la revendication précédente, **caractérisée en ce que** le au moins un évidement traversant (34) est situé entre le premier côté vertical (22) et le troisième côté (26) de l'aile latérale.

3. Chape (100) selon l'une quelconque des revendications précédentes, **caractérisée en ce que** le au moins un évidement (34) est un trou traversant.

4. Chape (100) selon la revendication précédente, **caractérisée en ce que** le contour du trou traversant est de forme circulaire ou oblongue.

5. Chape (100) selon l'une quelconque des revendications précédentes, **caractérisée en ce que** la plaque support (10) comporte un trou central (19), et **en ce que** le au moins un évidement (34) est situé au-dessus d'un plan horizontal (PH) passant par le centre (C) du trou central (19).

6. Chape (100) selon la revendication 1, **caractérisée en ce que** le au moins un évidement (34) est agencé au voisinage du creux de la découpe incurvée (46).

7. Chape (100) selon la revendications 1, **caractérisée en ce que** le au moins un évidement (34) est de forme oblongue et **en ce que** son contour comporte un tronçon courbé analogue à celui du profil incurvé de la découpe (46).

8. Chape (100) selon l'une quelconque des revendications précédentes, **caractérisée en ce que** chaque aile latérale (12) comporte une bande inférieure (29) de rigidification qui s'étend dans le plan de l'aile latérale (12), le long dudit deuxième côté (24), à partir de la plaque support (10).

9. Chape selon l'une quelconque des revendications précédentes, **caractérisée en ce qu'**elle présente une symétrie de conception par rapport à un plan vertical médian parallèle aux ailes latérales.

## Patentansprüche

1. Schale (100) für die Montage eines Kraftfahrzeugrades an einem Struktur- oder Aufhängungselement eines Kraftfahrzeugs, welche einen U-förmigen Querschnitt aufweist und welche umfasst:
- eine Stützplatte (10) für das Rad mit im Wesentlichen vertikaler Ausrichtung;
- und zwei dreieckige Seitenflügel (12), die parallel und zur Ebene der Stützplatte (10) orthogonal sind, von denen jeder von einer vertikalen ersten Seite (22), die der Stützplatte (10) benachbart ist, einer unteren zweiten Seite (24), die im Wesentlichen horizontal ist, und einer dritten Seite (26) begrenzt wird,
wobei jeder Seitenflügel (12) mindestens einen Bereich (34) verminderter Festigkeit aufweist, welcher sich plastisch verformt, wenn ein seitlicher Stoß auf den unteren Teil des Rades in einer Richtung (T) ausgeübt wird, die quer zur Ebene des Rades verläuft,
**dadurch gekennzeichnet, dass** jeder Flügel mindestens eine durchgehende Ausnehmung (34) aufweist, welche einen Bereich verminderter Festigkeit des Seitenflügels (12) darstellt, und dadurch, dass der Bereich verminderter Festigkeit außerdem einen gekrümmten Ausschnitt (46) aufweist, der in der dritten Seite (26) ausgebildet ist.

2. Schale (100) nach dem vorhergehenden Anspruch, **dadurch gekennzeichnet, dass** sich die mindestens eine durchgehende Ausnehmung (34) zwischen der vertikalen ersten Seite (22) und der dritten Seite (26) des Seitenflügels befindet.

3. Schale (100) nach einem der vorhergehenden Ansprüche, **dadurch gekennzeichnet, dass** die mindestens eine Ausnehmung (34) ein Durchgangsloch ist.

4. Schale (100) nach dem vorhergehenden Anspruch, **dadurch gekennzeichnet, dass** die Kontur des Durchgangsloches kreisförmig oder von länglicher Form ist.

5. Schale (100) nach einem der vorhergehenden Ansprüche, **dadurch gekennzeichnet, dass** die Stützplatte (10) ein zentrales Loch (19) aufweist, und dadurch, dass sich die mindestens eine Ausnehmung (34) oberhalb einer horizontalen Ebene (PH) befindet, die durch den Mittelpunkt (C) des zentralen Loches (19) verläuft.

6. Schale (100) nach Anspruch 1, **dadurch gekennzeichnet, dass** die mindestens eine Ausnehmung (34) in der Nähe der Einbuchtung des gekrümmten Ausschnitts (46) angeordnet ist.

7. Schale (100) nach Anspruch 1, **dadurch gekennzeichnet, dass** die mindestens eine Ausnehmung (34) von länglicher Form ist, und dadurch, dass ihre Kontur einen gekrümmten Abschnitt aufweist, der zu demjenigen des gekrümmten Profils des Ausschnitts (46) analog ist.

8. Schale (100) nach einem der vorhergehenden Ansprüche, **dadurch gekennzeichnet, dass** jeder Seitenflügel (12) einen unteren Versteifungsstreifen (29) aufweist, welcher sich in der Ebene des Seitenflügels (12) von der Stützplatte (10) aus entlang der zweiten Seite (24) erstreckt.

9. Schale nach einem der vorhergehenden Ansprüche, **dadurch gekennzeichnet, dass** sie eine Symmetrie der Konstruktion bezüglich einer zu den Seitenflügeln parallelen vertikalen Mittelebene aufweist.

## Claims

1. Shell (100), for mounting a wheel of a motor vehicle on a structural element or suspension element of a motor vehicle, which shell has a U-shaped cross section and includes:
- a wheel support plate (10) having an essentially vertical orientation;
- and two triangular side flanges (12) that are parallel and orthogonal to the plane of the support plate (10), each of which is delimited by a first vertical side (22) adjacent to the support plate (10), a second substantially horizontal bottom side (24), and a third side (26),
each side flange (12) including at least one area (34) of reduced resistance which deforms plastically when a lateral shock is applied to the bottom part of the wheel, in a transversal direction (T) in relation to the plane of the wheel,
**characterized in that** each flange comprises at least one through-cutout (34) that represents a region of reduced strength of the side flange (12) and **in that** the region of reduced strength further comprises a concave cutaway (46) formed in the third side (26).

2. Shell (100) according to the preceding claim, **characterized in that** the at least one through-cutout (34) is located between the first vertical side (22) and the third side (26) of the side flange.

3. Shell (100) according to either of the preceding claims, **characterized in that** the at least one through-cutout (34) is a through-hole.

4. Shell (100) according to the preceding claim, **characterized in that** the contour of the through-hole is circular or oblong.

5. Shell (100) according to any one of the preceding claims, **characterized in that** the support plate (10) comprises a central hole (19), and **in that** the at least one cutout (34) is situated below a horizontal plane (PH) passing through the centre (C) of the central hole (19).

6. Shell (100) according to Claim 1, **characterized in that** the at least one cutout (34) is arranged close to the hollow of the concave cutaway (46).

7. Shell (100) according to Claim 1, **characterized in that** the at least one cutout (34) is oblong in shape and **in that** its contour comprises a curved section similar to that of the concave profile of the cutaway (46).

8. Shell (100) according to any one of the preceding claims, **characterized in that** each side flange (12) comprises a lower stiffening strip (29) which extends in the plane of the side flange (12), along said second side (24), from the support plate (10).

9. Shell according to any one of the preceding claims, **characterized in that** it has symmetry of design with respect to a median vertical plane parallel to the side flanges.
